# EUROPEAN PATENT SPECIFICATION

(11) **EP 2 506 448 B1**
(45) Date of publication and mention of the grant of the patent: **04.08.2021**
(21) Application number: 12161301.2
(22) Date of filing: 26.03.2012
(51) Int. Cl.: H04B 5/00, H04W 52/02

(54) **Method and module for switching operating mode, and terminal equipment**
Verfahren und Modul zum Schalten des Betriebsmodus und Endgerätausrüstung
Procédé et module de commutation du mode de fonctionnement et équipement terminal

(30) Priority: 28.03.2011 CN 201110076053; 23.03.2012 US 201213428783
(43) Date of publication of application: 03.10.2012
(73) Proprietor: Sony Group Corporation, 108-0075 Tokyo (JP)
(72) Inventor: Zhang, Wei, 410007 Changsha (CN); Xu, Jian, 100036 Beijing (CN); Li, Dan, 163413 Daqing City (CN)
(74) Representative: Aera A/S

(56) References cited:
- US-A1- 2004 116 074
- US-A1- 2006 094 356
- US-A1- 2006 245 402
- US-A1- 2007 149 140
- US-A1- 2009 088 077
- US-A1- 2010 130 126
- None

## Description

### Technical Field

The present invention relates to near-field communication technology and in particular, to a method and module for switching operating mode and terminal equipment.

### Background Art

Near-field communication (NFC) is a short-haul non-contact communication wherein the NFC usually occurs between an initiator device and a target device. The initiator device generates a radio frequency field (RF field) to initialize the communication of NFCIP-1 (modulation scheme, encoding, transmission speed and frame format of RF interface) for initiating data transmission and making a data exchange request to the NFC target device. The target device selects an RF field initiated by the initiator device or generated by itself to communicate in response to the command initiated by the initiator device. The target device may be a passive memory card or a terminal device capable of processing data by itself.

When the target device is a terminal device capable of processing data by itself, the initiator device may communicate with the target device in an active communication mode or a passive communication mode.

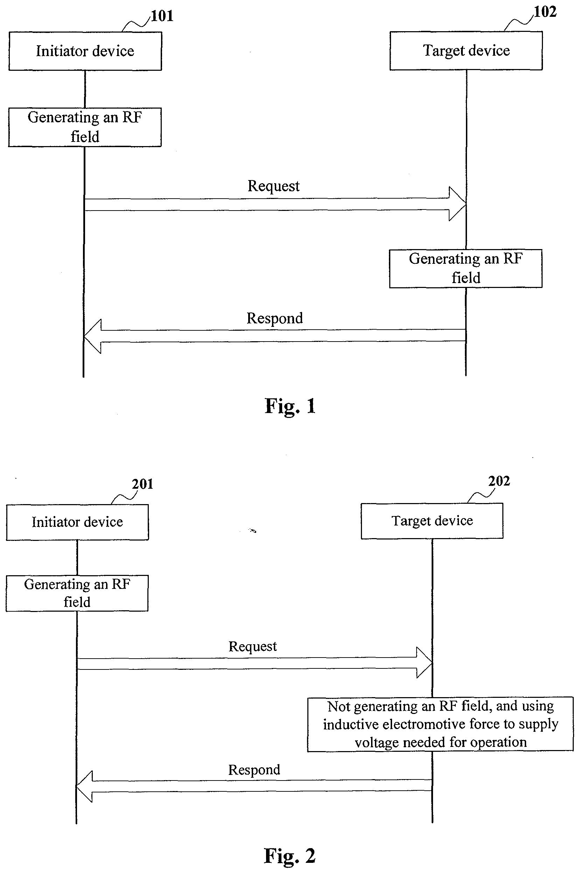

Figure 1 illustrates a schematic diagram of an NFC of an initiator device and a target device in an active communication mode of the prior art.

In the active communication mode, the initiator device 101 and the target device 102 respectively use self-generated RF field to communicate. The initiator device 101 receives power supplied from a power source to generate an RF field, and then transmits a request message according to a selected transmission speed to start data communication. The target device 102 receives the request message from the initiator device 101 and generates an RF field. Then the target device 102 makes a response at the same speed (i.e. the transmission speed selected by the initiator device). In the active communication mode, a very fast connecting configuration between the initiator device 101 and the target device 102 may be obtained. And the operation for generating the RF field consumes much energy than other operations.

Figure 2 illustrates a schematic diagram of an NFC of an initiator device and a target device in a passive communication mode of the prior art.

In the passive communication mode, the initiator device 201 and the target device 202 use RF field generated by the initiator device 201 to communicate. The initiator device 201 receives power supplied from a power source to generate an RF field, and then transmits a request message according to a selected transmission speed to initiate data communication. The target device 202 receives the request message from the initiator device 201 and uses the needed power supplied by induced electromotive force, instead of generating an RF field by itself. Then the target device 202 receives and transmits data by using a load modulation technique. In the passive communication mode, since the target device 202 does not generate an RF field, its power consumption is reduced greatly. Documents US 2006/245402 and US 2004/116074 provide an exemplary method for communication processing of an NFC communication device according to the operation described above.

However, in the implementation of the present invention, the applicant found that in the existing active NFC, it is necessary for both communication parties to generate an RF field, which consumes much power; while in the passive NFC, the high power-consumption operation for generating an RF field is performed by the initiator device, which obviously increases the power consumption at the mobile terminal in a case where the initiator device is a mobile terminal and the target device is fixed, thereby shortening the lifetime of the power source of the mobile terminal, which is disadvantageous. Furthermore, in a case where both devices concerned in the NFC are mobile terminals, it is also disadvantageous that the mobile terminal as the initiator device performs the high power-consumption operation for generating an RF field when the duration time of the power source of the mobile terminal as the initiator device is shorter than the duration time of the power source of the mobile terminal as the target device.

### Summary of the Invention

The embodiments of the present invention provide a method and module in accordance with the claims for switching operating mode to solve the above technical problem in the prior art and reasonably distribute power consumption in both devices in communication.

Many aspects of the invention can be better understood with reference to the following drawings. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

### Brief Description of the Drawings

The drawings are included to provide further understanding of the present invention, which constitute a part of the specification and illustrate the preferred embodiments of the present invention, and are used for setting forth the principles of the present invention together with the description. It is obvious that the accompanying drawings described below arc only part of the embodiments of the present invention, and other drawings may be obtained according to these drawings by those skilled in the art without making an inventive effort.
Figure 1 is a schematic diagram of a near-field communication of an initiator device and a target device in an active communication mode of the prior art;
Figure 2 is a schematic diagram of a near-field communication of an initiator device and a target device in a passive communication mode of the prior art;
Figure 3 is a flowchart of operating mode switch method between devices in near-field communication in a passive communication mode of embodiment 1 of the present invention;
Figure 4 is a flowchart of operating mode switch method between devices in near-field communication in a passive communication mode of embodiment 2 of the present invention;
Figure 5 is a flowchart of operating mode switch method between devices in near-field communication in a passive communication mode of embodiment 3 of the present invention;
Figure 6 is a flowchart of operating mode switch method between devices in near-field communication in a passive communication mode of embodiment 4 of the present invention;
Figure 7 is a flowchart of operating mode switch method between devices in near-field communication in a passive communication mode of embodiment 5 of the present invention;
Figure 8 is a flowchart of operating mode switch method between devices in near-field communication in a passive communication mode of embodiment 6 of the present invention;
Figure 9 is a schematic diagram of the structure of the operating mode switch module of embodiment 7 of the present invention;
Figure 10 is a schematic diagram of the structure of the switching unit when the device where the operating mode switch module is present is a current initiator device;
Figure 11 is a schematic diagram of the structure of the switching unit when the device where the operating mode switch module is present is a current target device;
Figure 12 is a block diagram of the operational circuit or system structure of the terminal equipment of embodiment 8 of the present invention;
Figure 13 is a block diagram of the operational circuit or system structure of the terminal equipment of embodiment 9 of the present invention;
Figure 14 is a flowchart of operating mode switching method between devices in near-field communication in an active communication mode of embodiment 10 of the present invention;
Figure 15 is a schematic diagram of the structure of the operating mode switch module of embodiment 11 of the present invention; and
Figure 16 is a schematic block diagram of the operational circuit or system structure of the terminal equipment of embodiment 12 of the present invention.

### Detailed Description of the Invention

The invention is defined by the appended claims.

Particular embodiments of the present invention will be described below in conjunction with the accompanying drawings. In the description below, details are given for explanation but not for limitation, for the full understanding of the present invention. However, it is obvious to those skilled in the art that the present invention may also be carried out in other embodiments departing from these details.

It should be noted that in order to prevent the present invention from being confused due to unnecessary details, only device structures and/or processing steps closely relevant to the scheme of the present invention are shown in the accompanying drawings, with other details not closely relevant to the present invention being omitted.

The interchangeable terms "electronic apparatus" and "electronic device" include portable radio communication apparatus. The term "portable radio communication apparatus", which hereinafter is referred to as a "mobile terminal", "portable electronic device", or "portable communication device", comprises all apparatuses such as mobile telephones, pagers, communicators, electronic organizers, personal digital assistants (PDAs), smartphones, portable communication devices or the like.

In the present application, embodiments of the invention are described primarily in the context of a portable electronic device in the form of a mobile telephone (also referred to as "mobile phone"). However, it shall be appreciated that the invention is not limited to the context of a mobile telephone and may relate to any type of appropriate electronic apparatus having the function of photographing and sound recording, examples of such electronic apparatus including a media player, gaming devices, a PDA, a computer, and a digital video camera, etc.

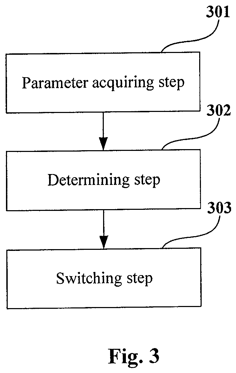

The preferred embodiments of the present invention are described as follows in reference to Figs. 3-12, taking that both parties in the near-field communication are in a passive communication mode as an example.

For the convenience of the description, in the passive communication mode, one device generating an RF field of the two devices in the near-field communication is referred to as an initiator device, and its operating mode is referred to as an initiative mode; and the other device not generating an RF field is referred to as a target device, and its operating mode is referred to as a target mode

### Embodiment 1

Figure 3 is a flowchart of operating mode switching method between devices in near-field communication in a passive communication mode of embodiment 1 of the present invention. As shown in Fig. 3, the method comprises:
step 301, a parameter acquiring step: acquiring by one device of a current initiator device and a current target device in the near-field communication relevant parameters of the other device including type of the device;
step 302, a determining step: determining by the one device whether to exchange operating modes with the other device according to the relevant parameters of the one device and the other device; wherein the relevant parameters of the one device include type of the device; and
step 303, a switching step: exchanging by the one device the operating mode of the one device with that of the other device, if the determining result in the determining step is positive, such that the one device performs the near-field communication with the other device in a switched operating mode.

In this embodiment, when the one device is a current initiator device, the switching of the operating mode refers to the one device being switched to the target mode to operate, and the other device being switched to the initiative mode to operate;
and when the one device is a current target device, the switching of the operating mode refers to the current target device being switched to the initiative mode to operate, and the other device being switched to the target mode to operate.

The switching of the operating modes in the following embodiments 2-9 have the same meanings as above, which shall not be described any further.

It can be seen from the above embodiment that in the near-field communication between the devices in near-field communication in the passive communication mode, either one of the current initiator device and the current target device may determine whether to exchange operating mode with the other device according to the relevant parameters including the type of the device, so as to realize more reasonable distribution of power consumption between both devices in the near-field communication, reducing power consumption of the current initiator device.

In step 301, the one device may acquire the relevant parameters of the other device from the other device in any existing manner.

For example, the one device may transmit a parameter inquiry request to the other device; and the other device may return its relevant parameters to the one device through a parameter response message after receiving the parameter inquiry request, such that the one device acquires the relevant parameters of the other device.

In such a case, when the one device transmits the parameter inquiry request to the other device, the type of the device may be included in the parameter inquiry request for transmission to the other device, such that the other device determines the relevant parameters provided to the one device according to the type of the parameters of the one device.

In this embodiment, the one device may acquire the relevant parameters of the other device from the other device at a predetermined time interval, namely, transmitting the parameter inquiry request to the other device at a predetermined time interval.

For example, the one device may also receive a switch inquiry message including the relevant parameters of the other device transmitted by the other device, so as to acquire the relevant parameters of the other device.

In this embodiment, when one device and the other device are both mobile devices, the relevant parameters further include a duration time T1 of one device and a duration time T2 of the other device, wherein the duration time is also referred to as an endurance time.

When one device is a current initiator device, the duration time of the current initiator device is the value obtained by dividing the current energy supplied to the current initiator device by the real-time power consumption of the current initiator device; and
when the other device is a current target device, the duration time of the current target device is the value obtained by dividing the current energy supplied to the current target device by the real-time power consumption of the current target device.

In the above embodiment, the duration time may be obtained by any existing manner. Two of the manners will be described below.
1) The duration time of the current initiator device or the current target device is obtained through current:
   in this case, the current energy of the battery of the device may be expressed by current, and may be measured by an amperemeter; and the current real-time power consumption may be expressed by the current real-time operating current, and the real-time operating current may also be measured by an amperemeter. Thus, the duration time is the ratio of the current total energy of the battery of the device to the current real-time operating current;
   for example, if it is measured by the amperemeter that the current total energy of the battery of the device is 1000 mA, and the current operating current (indicative of the real-time power consumption) is 100 mA (in which the operating current generated by the operating mode switch module responsible for switching the operating mode is 50 mA, and the real-time operating current of others, including communication, video and audio modules, is 50 mA in total), then the endurance time (duration time) of the device is 10 hours.
2) The duration time of the current initiator device or the current target device is obtained through energy:
   the current power and the real-time power consumption of the battery may be obtained using a coulometer for detecting power; and the following method may be used for obtaining the real-time power consumption: the energy of the current time and the next time is obtained first by the coulometer, and then the real-time power consumption is obtained through calculating the amount of change of the energy of the current time and the next time. Thus, the duration time is the ratio of the detected current energy to the calculated real-time power consumption.

What is described above is just an embodiment of the present invention, and the duration time may also be obtained through other manners.

Step 302 will be described below taking that the one device is the current initiator device and the other device is the current target device as an example:
a first case: if the one device determines according to the relevant parameters that the type of the one device is a mobile device and the type of the other device is a fixed device, the one device determines to exchange operating mode with the other device, namely, the one device is switched to the target operating mode to operate, i.e. to operate as a target device, and the other device is switched to the initiative mode to operate, i.e. to operate as an initiator device;
a second case: if the one device determines according to the relevant parameters that the type of the one device is a mobile device and the type of the other device is a passive device, the one device determines not to exchange operating mode with the other device;
in this case, since the other device, i.e. the current target device, cannot generate an RF field, the one device cannot be switched to the target mode to operate;
a third case: if the one device determines according to the relevant parameters that the type of the one device is a fixed device and the type of the other device is a mobile device, the one device determines not to exchange operating mode with the other device;
a fourth case: if the one device determines according to the relevant parameters that the types of the one device and the other device are both mobile devices, the one device further determines whether the duration time of the other device is greater than the duration time of the one device; if the determining result is that the duration time of the other device is greater than the duration time of the one device, the one device determines to exchange operating mode with the other device;
in this case, the relevant parameters include not only the type of device, but also the duration time; thus, when the types of the devices are both mobile devices and the duration time of the current target device is greater than that of the current initiator device, the one device may determine to exchange operating mode with the other device, thereby the energy consumption of the initiator device and the target device tending to equilibrium;
a fifth case: if the one device determines according to the relevant parameters that the types of the one device and the other device are both mobile devices, the one device further determines whether the duration time of the other device is greater than the duration time of the one device or not; if the determining result is that the duration time of the other device is greater than the duration time of the one device, the one device further determines whether the difference between the duration time of the other device and the duration time of the one device is greater than a first predetermined value, and if the difference is greater than the first predetermined value, the one device determines to exchange operating mode with the other device;
in this case, the relevant parameters include not only the type of device, but also the duration time; thus, when the types of the devices are both mobile devices and the duration time of the current target device is greater than that of the current initiator device and the difference between them is greater than a first predetermined value, the one device may determine to exchange operating mode with the other device, thereby the energy consumption of the initiator device and the target device tending to equilibrium, and the normal communication between the devices being prevented from being affected by the frequent switching between the devices;
wherein the first predetermined value may be preconfigured as actually required, such as being configured as 1 hour, and 2 hours, etc., but it is not limited thereto.

Step 302 will be described below taking that the one device is the current target device and the other device is the current initiator device as an example:
a first case: if the one device determines according to the relevant parameters that the type of the one device is a mobile device and the type of the other device is a fixed device, the one device determines not to exchange operating mode with the other device;
a second case: if the one device determines according to the relevant parameters that the type of the one device is a fixed device and the type of the other device is a mobile device, the one device determines to exchange operating mode with the other device;
a third case: if the one device determines according to the relevant parameters that the type of the one device is a passive device and the type of the other device is a mobile device, the one device determines not to exchange operating mode with the other device;
in this case, since the current target device cannot generate an RF field, the one device cannot be switched to the initiative mode to operate;
a fourth case: if the one device determines according to the relevant parameters that the types of the one device and the other device are both mobile devices, the one device further determines whether the duration time of the one device is greater than the duration time of the other device; and if the determining result is that the duration time of the one device is greater than the duration time of the other device, the one device determines to exchange operating mode with the other device;
in this case, the relevant parameters include not only the type of device, but also the duration time; thus, when the types of the devices are both mobile devices and the duration time of the current target device is greater than that of the current initiator device, the one device may determine to exchange operating mode with the other device, thereby the power consumption of the initiator device and the target device tending to equilibrium;
a fifth case: if the one device determines according to the relevant parameters that the types of the one device and the other device are both mobile devices, the one device further determines whether the duration time of the one device is greater than the duration time of the other device; if the determining result is that the duration time of the one device is greater than the duration time of the other device, the one device further determines whether the difference between the duration time of the one device and the duration of the other device is greater than a second predetermined value, and if the difference is greater than the second predetermined value, the one device determines to exchange operating mode with the other device;
in this case, the relevant parameters include not only the type of device, but also the duration time; thus, when the types of the devices are both mobile devices and the duration time of the current target device is greater than that of the current initiator device and the difference between them is greater than a second predetermined value, the one device may determine to exchange operating mode with the other device, thereby the power consumption of the initiator device and the target device tending to equilibrium, and the normal communication between the devices being prevented from being affected by the frequent switching between the devices;
wherein the second predetermined value may be preconfigured as actually required, such as being configured as 1 hour, and 2 hours, etc., but it is not limited thereto.

In step 303, in case it is determined in step 302 that the one device exchanges operating mode with the other device, the exchange of the operating mode may be performed in the following steps when the one device is a current initiator device and exchanges operating mode with the other device:
transmitting by the one device to the other device a switch request message instructing the one device to be switched to the target mode to operate, such that the other device generates an RF field and is switched to the initiative mode to operate;
detecting by the one device the RF field generated by the other device; and
terminating by the one device the generation of the RF field and switching to the target mode to operate if the RF field generated by the other device is detected.

When the one device is a current target device, the one device exchanges operating modes with the other device, comprising:
generating an RF field by the one device and switching to the initiative mode to operate; and
informing the other device, such that the other device terminates the generation of the RF field and switching to the target mode to operate when detecting the RF field generated by the one device.

It can be seen from the above embodiment that in the near-field communication between the devices in near-field communication in the passive communication mode, either one of the current initiator device and the current target device may determine whether to exchange operating mode with the other device according to the types of the devices or the types of the devices and duration times, so as to realize more reasonable distribution of power consumption between both devices in the near-field communication, reducing power consumption of the current initiator device.

### Embodiment 2

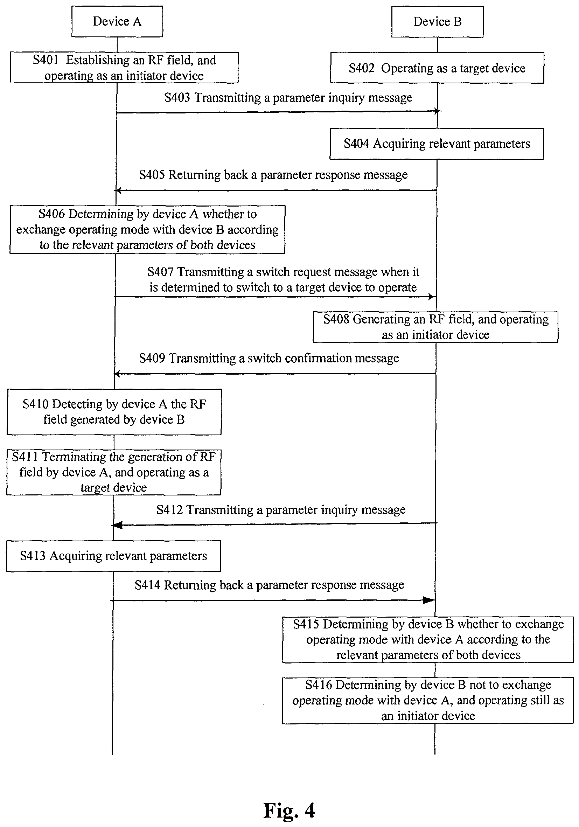

Figure 4 is a flowchart of operating mode switch method between devices in near-field communication in a passive communication mode of embodiment 2 of the present invention.

In this embodiment, the description is provided taking the near-field communication in a passive communication mode between device A and device B as an example, wherein device A is a current initiator device and device B is a current target device. In this embodiment, the relevant parameters of device B are obtained through transmitting by device A a parameter inquiry message to device B, the parameters comprising the type of device B.

Device A is terminal equipment of a portable electronic device powered by a battery, such as a mobile phone. Device B is, for example, a smart card as a passive device, or a fixed device powered by commercial power. For example, a fixed device that may be used as device B can be an automatic ticket issuing machine, ticket check gate, or an information booth, etc.

As shown in Fig. 4, the method comprises:
step S401: establishing an RF field and initiating near-field communication with device B in a passive mode by device A;
wherein device A operates as an initiator device and device B operates as a target device;
step S402: as shown in Fig. 4 ooperating as a target device, not generating an RF field by device B and using a load modulation method in the passive communication mode to make a response to the command of device A;
after the near-field communication is established, determining whether to exchange operating mode between device A and device B;
step S403: transmitting by device A to device B a parameter inquiry message, so as to acquire the relevant parameters of device B;
step S404: obtaining the relevant parameters of device B after receiving the parameter inquiry message from device A;
wherein if device B is a passive device or a fixed device, the relevant parameters may comprise the type of device B; and if device B is a mobile device, the relevant parameters may comprise the type and duration time of device B;
the type of the device may be pre-stored in device B and may be read by device B from a storing unit; and the duration time may be calculated using the manner described in embodiment 1;
in this embodiment, since device B is a passive device or a fixed device, the relevant parameters need only to include type of device;
step S405: returning back the acquired relevant parameters by device B through a parameter response message to device A;
step S406: determining by device A according to the relevant parameters of both devices whether to exchange operating mode with device B;
wherein after device A obtains the relevant parameters of device B, device A may acquire the relevant parameters of itself in the manner similar to that of device B, which shall not be described any further, the relevant parameters comprising the type of device; and then, device A determines according to the relevant parameters of both devices whether to exchange operating mode with device B;
wherein when the type of device A is a mobile device and type of device B is a passive device, device A may determine that exchange of operating mode with device B is not needed, namely, device A is still used as the initiator device and device B is used as the target device; in a case where it is determined that device A cannot be switched to operate as the target device, device A, still as the initiator device, proceeds to perform the near-field communication with device B; and preferably, device A transmits a parameter inquiry message to device B at a certain time interval, that is to say, performing the operations from step S403 to S406 at a predetermined time interval;
when the type of device A is a mobile device and type of device B is a fixed device powered by commercial power, device A may determine to exchange operating mode with device B, that is to say, device A is switched to the target mode to operate as a target device, and device B is switched to the initiative mode to operate as an initiator device;
step S407: transmitting by device A to device B a switch request message in a case where it is determined that device A can be switched to operate in a target mode, so as to request device B to be switched to the initiative mode to operate;
step S408: generating an RF field by device B after receiving the switch request message, and switching to the initiative mode to operate;
step S409: transmitting by device B to device A a switch confirmation message as an optional step after generating the RF field, so as to inform device A that an RF field has been generated;
step S410: detecting by device A the RF field generated by device B;
step S411: terminating by device A the generation of RF field when device A detects the RF field generated by device B in step S410, and using the RF field generated by device B as the target device to operate.

In the above embodiment, in a case where device B transmits to device A the switch confirmation message in step S409, device A starts to perform step S410 after receiving the switch confirmation message; however, in a case where device B does not transmit to device A the switch confirmation message, device A may start to detect the RF field generated by device B after transmitting the switch request message;
device A may be kept operating as a target device after the generation of RF field has been terminated in step S411;
at this moment, device A is switched to a target device to operate and device B is switched to an initiator device to operate; in such a case, device B, as the current initiator device, may further determine whether to exchange operating mode with device A, comprising the steps of:
step S412: transmitting by device B to device A a parameter inquiry message, so as to acquire the relevant parameters of device A;
wherein device B may transmit the type of device of itself to device A through the parameter inquiry message;
step S413: obtaining by device A the relevant parameters of device A after receiving the parameter inquiry message;
wherein in this embodiment, if device A is a mobile device and device B is not a mobile device, the relevant parameters may comprise the type of device A only; and if device A is a mobile device and device B is also a mobile device, the relevant parameters may comprise the type and duration time of device A, the manner for acquiring the relevant parameters being the same as described above, which shall not be described any further;
in this embodiment, since device B is a fixed device, the relevant parameters need only to comprise the type of device;
in this case, device B may transmit the type of device of its own to device A in transmitting the parameter inquiry message to device A in step S412, such that device A acquires the relevant parameters of device B according to the type of device B, that is to say, in the case where device A is a mobile device and device B is not a mobile device, device A needs only to acquire the type of device B;
step S414: returning by device A to device B the obtained relevant parameters through the parameter response message; and
step S415: determining by device B according to the relevant parameters of both devices whether to exchange operating mode with device A;
wherein device B determines whether to exchange operating mode with device A according to the relevant parameters of both devices after acquiring the relevant parameters of device A;
wherein if device B is an initiative device, the type of device B is not a passive device;
when the type of device A is a mobile device and the type of device B is a fixed device powered by commercial power, device B may determine not to exchange operating mode with device A, that is to say, device A operates as a target device and device B still operates as an initiative device.

It can be seen from the above embodiment that when device A is a mobile device and device B is a passive device or a fixed device, after device A determines to exchange operating mode with device B, more reasonable distribution of power consumption between both devices in the near-field communication may be realized, reducing power consumption of the current initiator device, i.e. power consumption of the mobile device.

### Embodiment 3

In above embodiment 2, the description is provided taking that device A is a mobile device and device B is a passive device or a fixed device as an example.

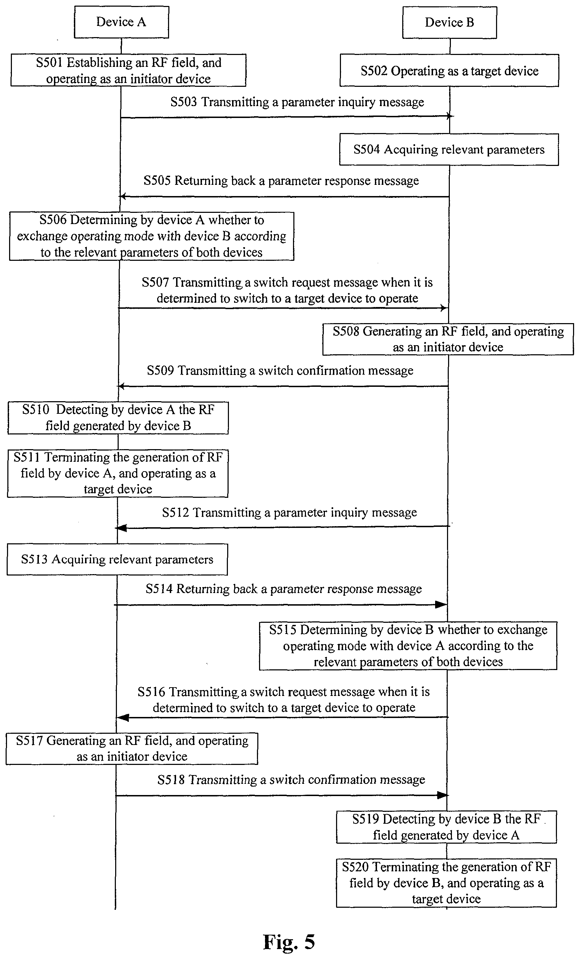

Fig. 5 is a flowchart of operating mode switch method between devices in near-field communication in a passive communication mode of embodiment 3 of the present invention, wherein device B and device A are both mobile devices.

In this embodiment, steps S501 to S503 are similar to the corresponding steps of embodiment 2 shown in Fig. 4, which shall not be described any further.

In step S504, after device B receives the parameter inquiry message transmitted by device A, the acquired relevant parameters comprise not only the type of device B, but also the duration time of device B.

In step S506, device A determines whether to exchange operating mode with device B according to the relevant parameters of both devices, comprising:
acquiring the relevant parameters of its own by device A after obtaining the parameters of device B, the relevant parameters comprising the type of device, and duration time of device A; then determining by device A whether to exchange operating mode with device B according to the relevant parameters of both devices.

If device A determines that the types of both devices A and B are mobile devices according to the relevant parameters of both devices, device A further determines whether the duration time of device B is greater than that of device A; and if the determining result is that the duration time of device B is greater than that of device A, device A determines to exchange operating mode with device B, that is to say, device A is switched to a target device to operate and device B is switched to an initiator device to operate.

In addition, in order to prevent the normal communication between the two devices from being affected by the frequent switching between the devices, whether the difference between the duration time of device B and that of device A is greater than a first predetermined value is determined if the determining result is that the duration time of device B is greater than that of device A; and if the determining result is positive, it is determined that device A is switched to a target device to operate and device B is switched to an initiate device to operate; wherein the first predetermined value is configured as temporally required, which shall not be described any further.

Steps S507 to S511 are similar to S407 to S411 of embodiment 2 shown in Fig. 4, which shall not be described any further.

In this case, the relevant parameters include not only the type of device, but also the duration time; thus, when the types of the devices are both mobile devices and the duration time of the current target device is greater than that of the current initiator device, the initiator device may determine to exchange operating mode with the target device, thereby the power consumption of the initiator device and the target device tending to equilibrium.

Furthermore, in the case where devices A and B are both mobile devices, the relationship between the duration times of devices A and B may change to a relatively large extent after a period of time. For example, since other applications consuming much power are suddenly added after device B is switched to a target device, the duration time of device B is shortened; or since other applications consuming much power in device A stop operating, the duration time of device A is extended. Therefore, it is preferable that device B, as a current initiator device, may transmit a parameter inquiry message at a certain time interval to device A, as a current target device, and perform the steps similar to steps S503 to S511, so as to determine whether to exchange operating mode with device A, as a current target device. The adopted steps S512 to S520 are similar to steps S503 to S511, and shall not be described any further. In step S512, similar to step S412 shown in Fig. 4, device B may transmit to device A the parameter inquiry message with its type of device included.

In the above embodiment, in step S509, when device B transmits to device A the switch confirmation message, device A starts to perform step S510 after receiving the switch confirmation message. However, when device B does not transmit to device A the switch confirmation message, device A may detect the RF field generated by device B after receiving the switch confirmation message.

It can be seen from the above embodiment that when devices A and B are both mobile devices, after device A determines to exchange operating mode with device B, more reasonable power consumption distribution may be realized between both devices in near-field communication, reducing the power consumption of the current initiator device. And after switching the operating mode for the first time, the initiator device may proceed to determine whether to switch operating mode, further realizing the reasonable distribution of power consumption.

### Embodiment 4

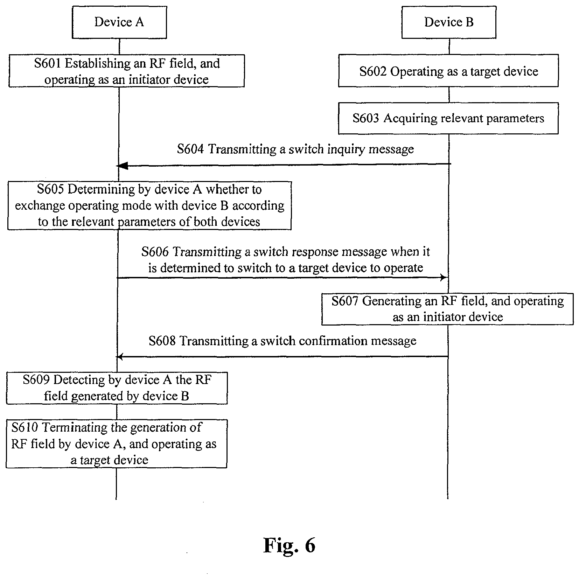

In above embodiments 2 and 3, device A, as the initiator device, acquires the relevant parameters of device B from device B, as the target device; furthermore, device A may also acquire the relevant parameters of device B in the manner shown in Fig. 6.

Fig. 6 is a flowchart of operating mode switch method between devices in near-field communication in a passive communication mode of embodiment 4 of the present invention.

As shown in Fig. 6, steps S601 and S602 are similar to steps S401 and S402 shown in Fig. 4, which shall not be described any further.

In step S603, device B, as the target device, first acquires its relevant parameters, for example, similar to embodiment 3, obtaining its type of device and duration time, and transmitting to device A a switch inquiry message with its relevant parameters included, such that device A acquires the relevant parameters of device B.

Step S605 is similar to step S506 shown in Fig. 5, which shall not be described any further.

In step S606, determining in step S605 that device A is to be switched to the target mode to operate, device A transmits to device B the switch response message.

Steps S607 to S610 are similar to steps S508 to S511 shown in Fig. 5, which shall not be described any further.

### Embodiment 5

In above embodiments 2, 3 and 4, description is provided taking that the initiator device determines whether to exchange operating mode as an example; in addition, the target device may also determine whether to exchange operating mode.

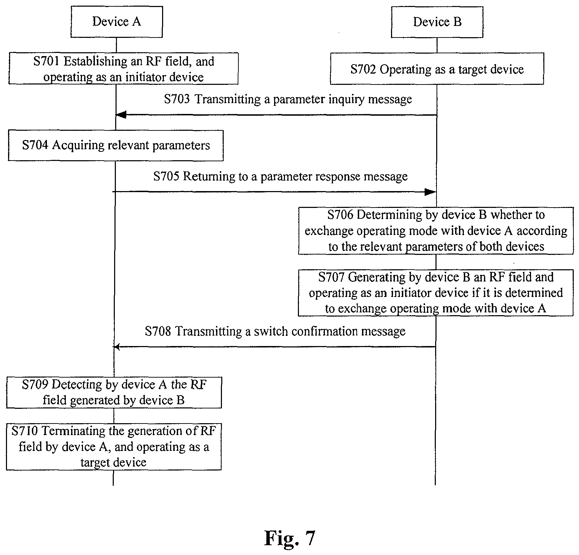

Fig. 7 is a flowchart of operating mode switch method between devices in near-field communication in a passive communication mode of embodiment 5 of the present invention, wherein device A is used as the initiator device and device B is used as the target device.

Steps S701 to S702 are similar to embodiment 2 and 3 shown in Fig. 4 and Fig.5, which shall not be described any further.

As shown in Fig. 7, device B, as the target device, determines whether to exchange operating mode, comprising the steps of:
step S703: transmitting by device B the parameter inquiry message to device A, so as to acquire the relevant parameters of device A;
step 704: obtaining by device A the relevant parameters of device A after receiving the parameter inquiry message;
wherein when device A is a mobile device and device B is also a mobile device, the relevant parameters of device A comprise the type of device and duration time; and when device A is a mobile device and device B is a passive device or fixed device, the relevant parameters of device A comprise the type of device of device A;
step S705: returning by device A to device B the acquired relevant parameters through a parameter response message;
step S706: determining by device B whether to exchange operating mode with device A according the relevant parameters of both devices;
wherein device B acquires the relevant parameters of its own after acquiring the relevant parameters of device A, the relevant parameters comprising the type of device; and then determining by device B whether to exchange operating mode with device A according the relevant parameters of both devices;
wherein the specific determination manner is the same as that described above in embodiments 2-4, which shall not be described any further;
step S707: generating by device B an RF field and operating as an initiator device after it is determined that device B can be switched to the initiative mode to operate;
step S708: transmitting by device B to device A a switch confirmation message as an optional step after generating the RF field, so as to inform device A that an RF field has been generated;
step S709: detecting by device A the RF field generated by device B after device A receives the switch confirmation message;
step S710: terminating by device A the generation of RF field when device A detects the RF field generated by device B in step S709, and using the RF field generated by device B as the target device to operate, that is to say, the operating mode of device A is switched to the target mode.

It can be seen from the above embodiment that after device B, as the target device, determines to exchange operating mode with device A, as the initiator device, more reasonable power consumption distribution may be realized between both devices in near-field communication, reducing the power consumption of the current initiator device, i.e. the power consumption of the mobile device.

### Embodiment 6

This embodiment differs from embodiment 5 in that the manner for acquiring the parameters of device A is different.

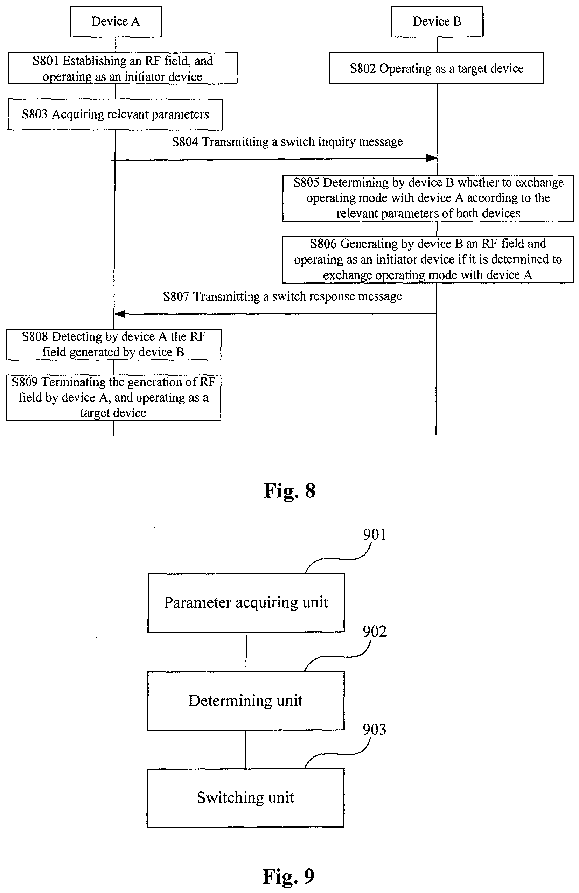

Fig. 8 is a flowchart of operating mode switch method between devices in near-field communication in a passive communication mode of embodiment 6 of the present invention, wherein device A operates as the initiator device and device B operates as the target device.

Steps S801 to S802 are similar to embodiments 2 and 3 shown in Figs. 4 and 5, which shall not be described any further.

As shown in Fig. 8, step S803: obtaining first by device A, as the initiator device, its relevant parameters, for example, obtaining its type of device, or its type of device and duration time;
step S804: transmitting by device A the switch inquiry message to device B, including its relevant parameters, such that device B acquires the relevant parameters of device A;
step S805: determining by device B whether to exchange operating mode with device A according to the relevant parameters of both devices;
wherein the determining method is the same as that described above in embodiments 1-4, which shall not be described any further;
step S806: generating by device B an RF field and switching to the initiative mode to operate as an initiator device if it is determined in step S805 that device B is to exchange operating mode with device A;
step S807: transmitting by device B to device B the switch response message;
step S808: detecting by device A the RF field generated by device B; and
step S809: terminating by device A the generation of the RF field and switching to the target mode to operate as a target device when device A detects the RF field generated by device B.

It can be seen from the above embodiment that after device B, as the target device, determines to exchange operating mode with device A, as the initiator device, more reasonable power consumption distribution may be realized between both devices in near-field communication, reducing the power consumption of the current initiator device, i.e. the power consumption of the mobile device.

In above embodiments 2-6, description is provided taking that the initiator device or the target device determines whether to exchange operating mode as an example. However, in practical embodiments, after it is determined to exchange operating mode for the first time, in determining whether to exchange operating mode for the second time, any manner described in above embodiments 2-6 may be used, which shall not be described any further.

It can be seen from the above embodiment that after devices A and B exchange operating modes, more reasonable power consumption distribution may be realized between both devices in near-field communication, reducing the power consumption of the current initiator device. And after the exchange of the operating modes for the first time, the initiator device may proceed to determine whether to exchange operating modes, so as to further realize reasonable power consumption distribution.

The above flowcharts are just exemplary and illustrative, and the methods according to the embodiments of the present invention is not necessarily to include each of the above steps, as some of the steps may be deleted, combined, or reversed. The methods of the embodiments of the present invention are carried out without being limited to the temporal orders as described in this specification, but can be carried out in other temporal orders, in parallel, or independently. Such variants shall be covered by the scope of the present invention without departing from the scope of the present invention.

For example, as shown in Fig. 5, in step S506, device A acquires its relevant parameters in receiving the parameter response message fed back by device B; however, such relevant parameters may also be acquired after the near-field communication is established, instead of being acquired after the parameter response message of device B is received. For example, the step of acquiring the relevant parameters of device A may be performed after the near-field communication is established and before the parameter inquiry message is transmitted.

In the above embodiment, device A may be terminal equipment of a portable electronic device powered by a battery, such as a mobile phone. Device B may be, for example, a smart card as a passive device, a mobile device of a portable electronic device in the form of a mobile phone powered by a battery, or a fixed device powered by commercial power. For example, a fixed device that may be used as device B can be an automatic ticket issuing machine, ticket check gate, or an information booth, etc.

The embodiments of the present invention further provide an operating mode switch module and terminal equipment as described below. As the principles for the operating mode switch module and terminal equipment in solving the technical problems are similar to the near-field communication method as described in above embodiments 1-6, the implementation of the operating mode switch module and terminal equipment may refer to the implementation of the method, which shall not be described any further.

### Embodiment 7

Following description is given taking an operating mode switch module in the passive communication mode as an example.

Fig. 9 is a schematic diagram of the structure of the operating mode switch module of embodiment 7 of the present invention. As shown in Fig. 9, the operating mode switch module comprises: a parameter acquiring unit 901, a determining unit 902 and a switching unit 903, wherein
the parameter acquiring unit 901 is used to acquire the relevant parameters containing the type of the device of the other device in near-field communication with the device where the operating mode switch module is present;
the determining unit 902 is used to determine whether to exchange operating modes with the other device according to the relevant parameters of the device where the operating mode switch module is present and the relevant parameters of the other device acquired by the parameter acquiring unit 901; wherein the relevant parameters of the device where the operating mode switch module is present include type of the device; and
the switching unit 903 is used to exchange the operating mode of the device where the operating mode switch module is present with the other device, if the determining result of the determining unit 902 is positive, such that the device where the operating mode switch module is present performs near-field communication with the other device in the exchanged operating mode.

When the device where the operating mode switch module is present is a current initiator device, the switching of operating mode refers to that the device where the operating mode switch module is present is switched to a target mode to operate and the other device is switched to an initiative mode to operate;
and when the device where the operating mode switch module is present is a current target device, the switching of operating mode refers to that the device where the operating mode switch module is present is switched to an initiative mode to operate and the other device is switched to a target mode to operate.

The meanings of switching operating modes in the following embodiments are the same as what described above, which shall not be described any further.

It can be seen from the above embodiment that in the near-filed communication between the devices in near-filed communication in the passive communication mode, either one of the current initiator device and the current target device where the operating mode switch module is present can determine whether to exchange operating mode with the other device according to the relevant parameters including the type of device, so as to realize more reasonable distribution of power consumption between both devices in the near-field communication, reducing power consumption of the current initiator device.

In this embodiment, the manner for the parameter acquiring unit 901 to acquire the relevant parameters is the same as the two manners described in embodiments 1-6, which shall not be described any further.

In this embodiment, for the convenience of description, the operating mode switch module is referred to as operating mode switch module A when the device where the operating mode switch module is present is a current initiator device , and the operating mode switch module is referred to as operating mode switch module B when the device where the operating mode switch module are present is a current target device .

In this embodiment, the determining unit 902 of the operating mode switch module A may be used in the following cases; however, these cases are just embodiments of the present invention and the present invention are not limited thereto, and other manners may also be adopted for determination:
a first case: the determining unit 902 is used to determine that the device where the operating mode switch module is present to exchange operating mode with the other device when the type of the device where the operating mode switch module is present is a mobile device and the type of the other device is a fixed device;
a second case: the determining unit 902 is used to determine that the device where the operating mode switch module is present not to exchange operating mode with the other device when it is determined that the type of the device where the operating mode switch module is present is a mobile device and the type of the other device is a passive device;
a third case: the determining unit 902 is used to determine that the device where the operating mode switch module is present not to exchange operating mode with the other device when it is determined that the type of the device where the operating mode switch module is present is a fixed device and the type of the other device is a mobile device;
a fourth case: the relevant parameters further comprise the duration time of the device where the operating mode switch module is present and the duration time of the other device.

For these cases the determining unit 902 comprises the following units (not shown):
a first determining unit to determine whether the duration time of the other device is greater than the duration time of the device where the operating mode switch module is present when the types of the device where the operating mode switch module is present and the other device are both mobile devices;
a second determining unit to determine that the device where the operating mode switch module is present to exchange operating mode with the other device when the determining result of the first determining unit is positive.
a fifth case: the relevant parameters further comprise the duration time of the device where the operating mode switch module is present and the duration time of the other device.

For the fifth case just above the determining unit 902 comprises the following units (not shown):
a third determining unit to determine whether the duration time of the other device is greater than the duration time of the device where the operating mode switch module is present when the types of the device where the operating mode switch module is present and the other device are both mobile devices;
a fourth determining unit to determine whether the difference between the duration time of the device where the operating mode switch module is present and the duration time of the other device is greater than a first predetermined value when the determining result of the third determining unit is positive;
a fifth determining unit to determine that the device where the operating mode switch module is present to exchange operating mode with the other device when the determining result of the fourth determining unit is positive;
wherein the first predetermined value may be preconfigured as actually required, such as being configured as 1 hour, and 2 hours, etc., but it is not limited thereto.

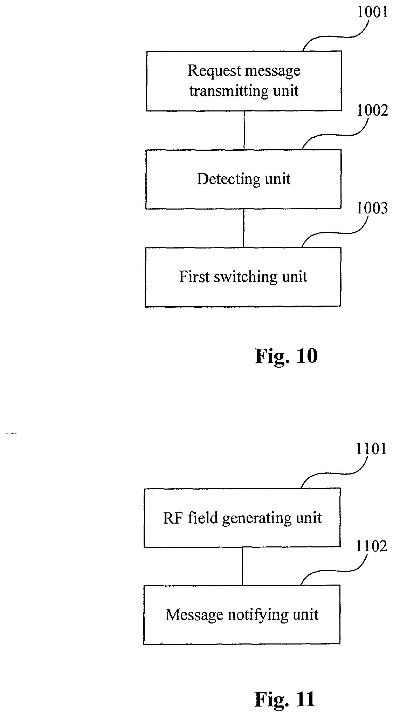

For the operating mode switch module A, as shown in Fig. 10, its switching unit 903 may comprise:
a request message transmitting unit 1001 to transmit to the other device a switch request message instructing the device where the operating mode switch module is present to operate as a target device when it is determined by the determining unit to exchange operating mode with the other device, such that the other device generates an RF field and operates as an initiator device, for example, the switch request message shown in Fig. 5, or the switch response message shown in Fig. 6, but it is not limited thereto, and other messages may also be adopted;
a detecting unit1002 to detect the RF field generated by the other device; and
a first switching unit 1003 to terminate the generation of the RF field and switching to the target mode to operate when the RF field generated by the other device is detected by the detecting unit1002.

Furthermore, the switching unit 903 may optionally comprise a response message receiving unit (not shown) to receive the response message transmitted by the other device, and the detecting unit1002 may detect an RF field after the response message receiving unit receives the response message.

In this embodiment, the determining unit 902 of the operating mode switch module B may be used in the following cases; however, these cases are just embodiments of the present invention and the present invention is not limited thereto, and other manners may also be used for determination:
a first case: the determining unit 902 is used to determine that the device where the operating mode switch module is present not to exchange operating mode with the other device when the type of the device where the operating mode switch module is present is a mobile device and the type of the other device is a fixed device;
a second case: the determining unit 902 is used to determine that the device where the operating mode switch module is present to exchange operating mode with the other device when it is determined that the type of the device where the operating mode switch module is present is a fixed device and the type of the other device is a mobile device;
a third case: the determining unit 902 is used to determine that the device where the operating mode switch module is present not to exchange operating mode with the other device when it is determined that the type of the device where the operating mode switch module is present is a passive device and the type of the other device is a mobile device;
a fourth case: the relevant parameters further comprise the duration time of the device where the operating mode switch module is present and the duration time of the other device; and the determining unit 902 comprises the following units (not shown):
   a sixth determining unit to determine whether the duration time of the device where the operating mode switch module is present is greater than the duration time of the other device when the types of the device where the operating mode switch module is present and the other device are both mobile devices;
   a seventh determining unit to determine that the device where the operating mode switch module is present to exchange operating mode with the other device when the determining result of the sixth determining unit is positive;
   a fifth case: the relevant parameters further comprise the duration time of the device where the operating mode switch module is present and the duration time of the other device; and the determining unit 902 comprises the following units (not shown):
      an eighth determining unit to determine whether the duration time of the device where the operating mode switch module is present is greater than the duration time of the other device when the types of the device where the operating mode switch module is present and the other device are both mobile devices;
      a ninth determining unit to determine whether the difference between the duration time of the device where the operating mode switch module is present and the duration time of the other device is greater than a second predetermined value when the determining result of the sixth determining unit is positive;
      a tenth determining unit to determine that the device where the operating mode switch module is present to exchange operating mode with the other device when the determining result of the ninth determining unit is positive;
      wherein the second predetermined value may be preconfigured as actually required, such as being configured as 1 hour, and 2 hours, etc., but it is not limited thereto.

In this embodiment, for the operating mode switch module B, as shown in Fig. 11, its switching unit 903 may comprise:
an RF field generating unit 1101 to generate an RF field and operate as an initiator device when it is determined by the determining unit 902 to exchange operating mode with other device; and
a message notifying unit 1102 to notify the other device, such that the other device terminates the generation of the RF field and is switched to a target device to operate when the other device detects the RF field generated by the one device; for example, in Figs. 5 and 6, the other device is notified through a switch confirmation message.

In the above embodiment, when both of the devices are mobile devices, either the operating mode switch module A or the operating mode switch module B may further comprise a calculating unit (not shown) to calculate the duration time of the device where the operating mode switch module is present in a manner as described in embodiment 1, which shall not be described any further. The type of device may be obtained from the storing unit of the device where the operating mode switch module is present.

It can be seen from the above embodiment that the operating mode switch module may be arranged in different devices, that is to say, the device comprising the operating mode switch module A may be an initiator device, and the device comprising the operating mode switch module B may be a target device, such that the initiator device and the target device in near-field communication exchange operating mode realize more reasonable power consumption distribution in both parties in near-field communication and reducing the power consumption of the current initiator device.

The specific flow of the implementation of the device comprising the operating mode switch module A being the initiator device and the device comprising the operating mode switch module B being the target device is as described in embodiments 1 to 6, which shall not be described any further.

### Embodiment 8

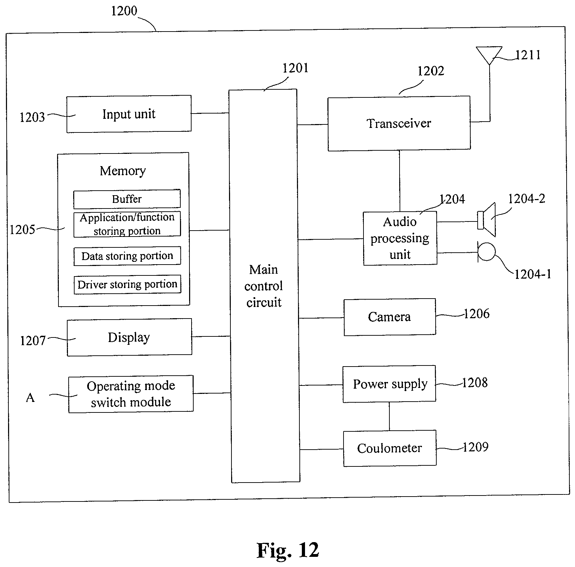

Fig. 12 is a schematic diagram of the structure of the terminal equipment containing an operating mode switch module of embodiment 8 of the present invention, wherein the terminal equipment comprises the operating mode switch module A as described in embodiment 7.

For example, the terminal equipment is a mobile phone, and this figure is exemplary only; the mobile phone 1200 may further have other types of circuit parts to supplement or replace this operational circuit, so as to realize the communication function or other functions. It is obvious that the mobile phone 1200 shown in Fig. 12 illustrates more parts than may be necessary to practice the invention, for example, the camera 1206 may be excluded.

In particular, the mobile phone 1200 comprises a main control circuit 1201, a transceiver 1202, an input unit 1203, an audio processing unit 1204, a memory 1205, a camera 1206, a display 1207, a power supply 1208, a coulometer 1209 and a operating mode switch module A. The main control circuit 1201 is sometimes referred to as a controller or an operational control, which may comprise a microprocessor or other processing devices and/or logic devices, and receive input and control the operations of every components of the mobile phone 1200.

As usual, the input unit 1203 provides multiple user input operations. For example, the input unit 1203 generally comprises alphanumeric keys to allow for input of alphanumeric information, such a telephone number, a telephone number list, information on contact, and remarks, etc. Furthermore, the input unit 1203 may comprise specific functional keys, such as a "call transmit" key to initiate a call or respond a call, a "call end" key to end or "hang up" a call, and a channel recommendation key, etc. Optionally or alternatively, the input unit 1203 may be a touch screen. The function of a key or functions similar to the function of a key may be implemented as a touch screen related to the display 1207.

As usual, the camera 1206 is used to capture image data. The image data captured by the camera 1206 is supplied to the main control circuit 1201 for use in a conventional way, such as for storage, and for transmission, etc.

The display 1207 may be for example an LCD display, but it is not limited thereto. As usual, the display 1207 displays information to a user, such as an operating state, time, a phone number, information on a contact, and navigation menus, etc., so that the user can use all the functions of the telephone 1200. The display 1207 may also be visually display the contents received from the mobile phone 1200 and/or the contents taken from the memory 1205 of the mobile phone 1200.

The mobile phone 1200 comprises an antenna 1211 coupled to the transceiver 1202. The transceiver 1202 comprises an RF transmitter and receiver to transmit and receive signals through the antenna 1211. The transceiver 1202 may be configured to operate in such mobile communication systems as GSM, CDMA, and WCDMA, etc., and receives audio contents. For example, the receiver may be an IP data broadcasting compatible receiver, which is compatible with a mixed network structure providing mobile communication and services based on DVB-H or similar services.

Furthermore, the transceiver 1202 is also coupled to a loudspeaker 1204-2 and a microphone 1204-1 via the audio processing unit 1204, so as to provide audio output via the loudspeaker 1204-2 and receive audio input from the microphone 1204-1. The audio processing unit 1204 may also comprise any appropriate buffers, decoders, and amplifiers, etc. Furthermore, the audio processing unit 1204 may be coupled to the main control circuit 1201, thereby enabling recording in the mobile phone 1 via the microphone 1204-1, that is, enabling the audio signals stored in the memory 1205 to be played via the loudspeaker 1204-2.

The memory 1205 may be one or more of a buffer, a flash memory, a hard drive, a mobile medium, a volatile memory, a nonvolatile memory, or other appropriate devices. For example, the memory 1205 comprises: a buffer cache to buffer data; an application/function storing portion to store applications and function programs or to store the operational flows to be executed by the main control circuit 1201; a data storing portion to store the data indicative of the type of the mobile phone, here, the code of the mobile device, and furthermore, to store the numerical values of the current energy, real-time power consumption of the mobile phone 1200, and contact, digital data, pictures, voices and/or other data used by the mobile phone 1200; and a driver storing portion to store the drivers of all the components of the mobile phone 1200, such as the drivers of the operating mode switch module A.

The power supply 1208 is used to supply power to the mobile phone 1, and the coulometer 1209 is used to measure the current energy of the power supply 1208.

It can be seen from embodiment 1 that if the duration time of the mobile phone 1200 is acquired through current, the coulometer 1209 may be an amperemeter, which may be two, one for measuring the current total power of the battery, and the other for measuring the operating current of all the components including the operating mode switch module A of the mobile phone 1200; and then the two measured current values are compared to obtain the duration time of the mobile phone 1200.

In addition, if the duration time of the mobile phone 1200 is acquired through energy, the coulometer 1209 may comprise two coulometers, one for measuring the current energy of the battery of the mobile phone 1200, and the other for detecting the energy at the current instant and at the next instant; in such a case, the duration time is the ratio of the current energy of the battery detected by the coulometer to the amount of change of the energy between the current instant and the next instant. The precision of the coulometer for measuring the current energy of the battery of the mobile phone may be lower than that of the coulometer for measuring the power at a certain instant.

When the duration time is obtained by using the above two methods, the operating mode switch module A may further comprise a calculating unit to calculate the duration time.

The operating mode switch module A is an operating mode switch module disposed within the initiator device, that is to say, the mobile phone 1200 is the initiator device, and the operating mode switch module A is used to establish near-field communication with the operating mode switch module B in device B as the target device and may determine whether to exchange operating mode with device B after the near-field communication is established. The structure and communication manner of the operating mode switch module A are as described in embodiments 1-4, which shall not be described any further.

When the relevant parameters of the mobile phone 1200 are determined, for example, the operating mode switch module A may determine the duration time of the mobile phone 1200 based on the current energy and real-time power consumption measured by the coulometer 1209 and read the code representative of the type of the mobile phone 1200 from the data storing portion in the memory 1205 in the mobile phone 1200. In particular, the calculating unit in the operating mode switch module A may calculate the duration time of the mobile phone 1200 by dividing the current power measured by the coulometer 1209 by the real-time power consumption of the device A.

All the components in the mobile phone 1200 may be implemented by specific hardware, firmware, software, or a combination thereof, without departing from the scope of the present invention.

### Embodiment 9

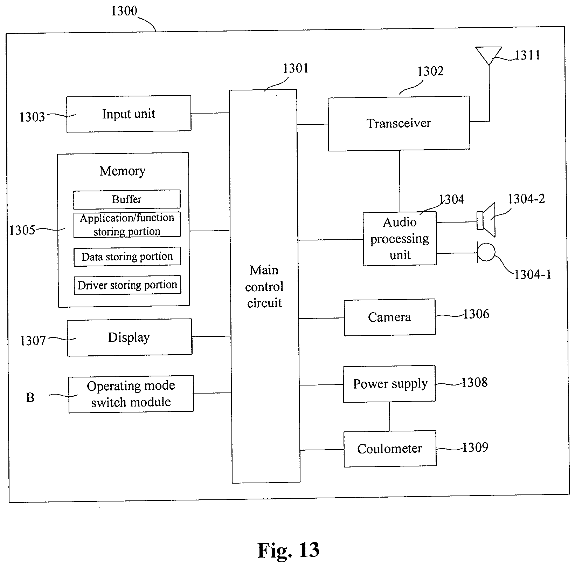

Terminal equipment may be provided in embodiment 9. As shown in Fig. 13, the equipment 1300 and respective components 1301-1309 and 1311 may comprise all the components 1201-1209 and 1211, respectively, shown in Fig. 12, with the exception that the operating mode switch module A is replaced by the operating mode switch module B, such that the device containing the operating mode switch module B is used as the target device. The structure and communication manner of the operating mode switch module B are as described in embodiments 5-7, which shall not be described any further. The functions of all the components of the target device and the function of the operating mode switch module B are as described in the above embodiments, which shall not be described any further.

Furthermore, terminal equipment may be provided in another embodiment of the present invention, which comprises the operating mode switch module A and the operating mode switch module B at the same time. In cases where different operating mode switch modules operate, the terminal equipment may correspond respectively to the initiator device and the target device, and the structures and communication manners of the switch modules for operating mode are as described in embodiments 8 and 9, which shall not be described any further.

It can be seen from the above embodiment that in the near-field communication between the near-field communication devices in a passive communication mode, either one of the current initiator device and the current target device containing the operating mode switch module may determine whether to exchange operating mode with the other device according to the relevant parameters including the type of device, so as to realize more reasonable power consumption distribution in both parties in near-field communication and reduce the power consumption of the current initiator device.

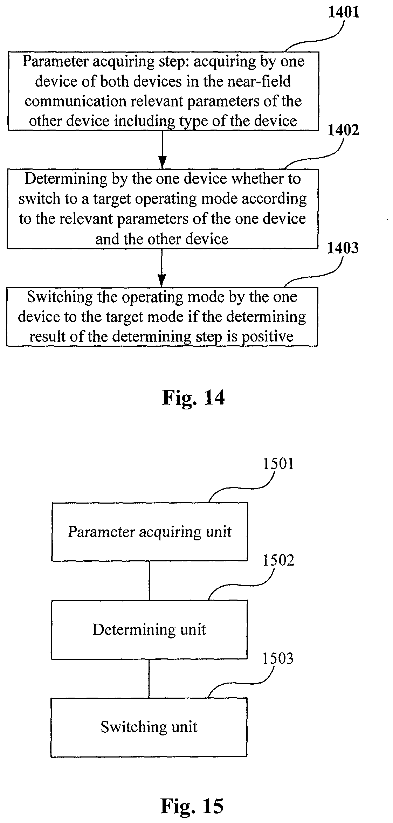

Following embodiments of the present invention will be described with reference to Figs. 14-16 and taking that the communication mode of both parties in near-field communication being an active mode of communication as an example.

### Embodiment 10

In the active mode of communication, both devices in near-field communication generate an RF field; however, one of the devices may determine whether to switch to the target mode to operate according to the relevant parameters of both devices including the type of device, or further including the duration time; and if the determining result is that it can be switched to the target mode to operate, the power consumption of this device may be reduced.

Fig. 14 is a flowchart of operating mode switch method between devices in near-field communication in an active communication mode of embodiment 10 of the present invention. As shown in Fig. 14, the method comprises:
a parameter acquiring step S 1401: acquiring by one device of both devices in the near-field communication relevant parameters of the other device including type of the device;
a determining step S1402: determining by the one device whether to switch to a target operating mode according to the relevant parameters of the one device and the other device; wherein, the relevant parameters of the one device include type of the device; and
a switching step S1403: switching the operating mode by the one device to the target mode, if the determining result of the determining step is positive.

It can be seen from the above embodiment that in the active mode of communication, both of the devices in near-field communication generate an RF field; however, one of the devices may determine whether to switch to the target mode to operate according to the relevant parameters of both devices including type of the device, and if the determining result is that it can be switched to the target mode to operate, the power consumption of this device may be reduced.

In this embodiment, the manner in which step S1401 is implemented is as described in the above embodiment, which shall not be described any further.

Likewise, the determining step S1402 may include the following cases:
first case: the one device determines to switch to the target mode to operate if the one device determines according to the relevant parameters that the type of the one device is a mobile device and the type of the other device is a fixed device;
second case: the one device determines not to switch to the target mode to operate if the one device determines according to the relevant parameters that the type of the one device is a fixed device and the type of the other device is a mobile device;
third case: the relevant parameters comprise further the duration time of the one device and the duration time of the other device.

The one device further determines whether the duration time of the other device is greater than the duration time of the one device when the one device determines according to the relevant parameters that the types of the one device and the other device are both mobile devices; and if the determining result is positive, the one device determines to switch to the target mode to operate.

In such a case, whether the difference between the duration times is greater than a predetermined value (such as 1 hour, and 2 hours, etc.) may further be determined before determining to switch to the target mode to operate; if the difference is greater than the predetermined value, it is determined to switch to the target mode to operate.

In this embodiment, in step S1403, switching the operation mode to the target mode refers to switching one of the both devices in an active mode to the target mode to operate, that is to say, this device stops generating an RF field, thereby reducing the power consumption of this device.

It can be seen from the above embodiment that when both of the devices are mobile devices, whether to switch to the target mode to operate is determined according to the types and duration times of both devices, and if it may be switched, the power consumption of the one device may by reduced.

### Embodiment 11

Fig. 15 is a schematic diagram of the structure of the operating mode switch module of embodiment 11 of the present invention. As shown in Fig. 15, the operating mode switch module comprises:
a parameter acquiring unit 1501 to acquire the relevant parameters containing the type of the device of the other device in near-field communication with the device where the operating mode switch module is present;
a determining unit 1502 to determine whether to switch to a target mode to operate according to the relevant parameters of the device where the operating mode switch module is present and the other device; wherein the relevant parameters of the one device include type of the device; and
a switching unit 1503 to switch the operating mode of the device where the operating mode switch module is present to the target mode, if the determining result of the determining unit is positive.

It can be seen from the above embodiment that in the active mode of communication, both of the devices in near-field communication generate an RF field; however, one of the devices determines whether to switch to the target mode to operate according to the relevant parameters of both devices including type of the device, and if the determining result is that it can be switched to the target mode to operate, the power consumption of this device may be reduced.

In this embodiment, the determining unit 1502 is used to determine that the device where the operating mode switch module is present is to be switched to the target mode to operate when the type of the device where the operating mode switch module is present is a mobile device and the type of the other device is a fixed device.

In this embodiment, the determining unit 1502 is used to determine that the device where the operating mode switch module is present is not to be switched to the target mode to operate when the type of the device where the operating mode switch module is present is a fixed device and the type of the other device is a mobile device.

In this embodiment, the relevant parameters include the duration time of the one device and the duration time of the other device.

The determining unit 1502 is used to determine that the device where the operating mode switch module is present is to be switched to the target mode to operate when the types of the device where the operating mode switch module is present and the other device are both mobile devices and the duration time of the other device is greater than the duration time of the device where the operating mode switch module is present.

In such a case, whether the difference between the duration times is greater than a predetermined value (such as 1 hour, and 2 hours, etc.) may further be determined before it is determined by the determining unit 1502 to switch to the target mode to operate; if the difference is greater than the predetermined value, it is determined to switch to the target mode to operate.

In this embodiment, switching the operation mode to the target mode by the switching unit 1503 refers to switching one of the both devices in an active mode to the target mode to operate, that is to say, this device stops generating an RF field, thereby reducing the power consumption of this device.

It can be seen from the above embodiment that when both of the devices are mobile devices, whether to switch to the target mode to operate is determined according to the types and duration times of both devices, and if it may be switched, the power consumption of the one device may by reduced.

### Embodiment 12

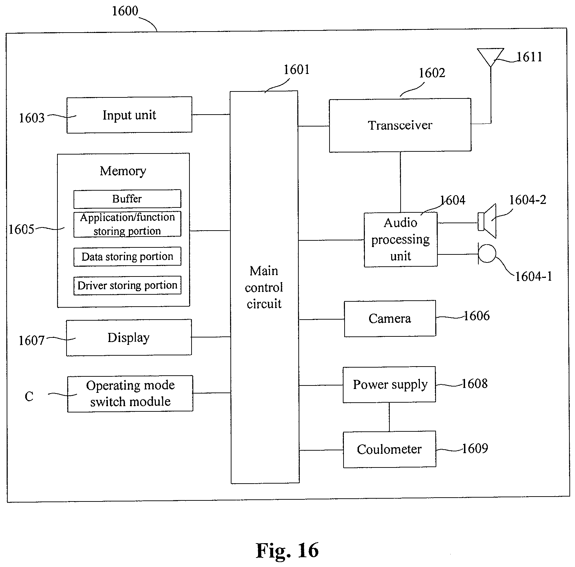

Fig. 16 is a schematic block diagram of the operational circuit or system structure of the terminal equipment of embodiment 12 of the present invention. As shown in Fig. 12, the terminal equipment 1600 comprises the operating mode switch module C , of which the structure and function are similar to that of the above embodiment, which shall not be described any further; and other components 1601-1609 and 1611 are similar to those shown in Figs. 12 and 13 (designated by corresponding reference numerals 1201-1209 and 1211 and by corresponding reference numerals 1311-1309 and 1311, respectively), with the functions of the identical parts being identical to those shown in Figs. 12 and 13, which shall not be described any further.

It can be seen from the above embodiment that one of the devices in near-field communication may determine whether to switch to the target mode to operate according to the relevant parameters of both devices in near-field communication including the type of device, or further including the duration times of both devices, or may determine whether to exchange operating mode with other device, thereby realizing more reasonable power consumption distribution in both devices in near-field communication.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

The above devices and methods of the present invention may be implemented by hardware, and may also be implemented by hardware in combination with software. The present invention relates to such a computer-readable program that when the program is executed by a logic part, it enables the logic part to realized the above-described devices or components, or enables the logic part to realize all the methods and steps as described above. The present invention relates also to a storage medium storing the above program, such as a hard disc, a floppy disc, a compacted disc, a DVD, and a flash memory, etc.

## Claims

1. A method for switching operating mode between near-field communication devices, the method comprising the steps of:
a parameter acquiring step (301, 1401): acquiring, by one device of two devices in near-field communication, relevant parameters of the one device and the other device including type of the other device, a remaining battery duration of the one device and a remaining battery duration of the other device;
a determining step (302, 1402): determining, by the one device, whether to switch to a target operating mode according to the relevant parameters of the one device and the other device, wherein the relevant parameters of the one device include type of the one device, and determining whether the remaining battery duration of the other device is greater than the remaining battery duration of the one device; and
a switching step (303, 1403): switching the operating mode by the one device to the target mode if the determining results of the determining step are positive.

2. The method according to claim 1, wherein the determining, by the one device, whether to switch to a target operating mode according to the relevant parameters of the one device and the other device comprises:
determining, by the one device, whether the types of the one device and the other device are both mobile devices.

3. The method according to claim 2, wherein the one device is a current initiator device and the other device is a current target device, and
wherein the remaining battery duration of the current initiator device (101, 201) is a value obtained by dividing a current energy supplied to the one device (101, 201) by a real-time power consumption of the current initiator device (101, 201); and
the remaining battery duration of the current target device (102, 202) is a value obtained by dividing a current energy supplied to the current target device (102, 202) by a real-time power consumption of the current target device (102, 202).

4. The method according to claim 1, wherein the parameter acquiring step comprises: receiving by the one device a switch inquiry message containing the relevant parameters of the other device transmitted by the other device, to acquire the relevant parameters of the other device; wherein the relevant parameters comprise the type and the remaining battery duration of the other device.

5. A method for switching operating mode between near-field communication devices, the method comprising the steps of:
a parameter acquiring step (301, 1401): acquiring, by one device of two devices in near-field communication, relevant parameters of the one device and the other device including type of the other device, a remaining battery duration of the one device and a remaining battery duration of the other device;
a determining step (302, 1402): determining, by the one device, whether to exchange operating modes with the other device according to the relevant parameters of the one device and the other device, wherein the relevant parameters of the one device include type of the one device, and determining whether the remaining battery duration of the other device is greater than the remaining battery duration of the one device; and
a switching step (303, 1403): exchanging the operating mode of the one device with that of the other device if the determining results of the determining step are positive.

6. The method according to claim 5, wherein the one device is a current initiator device (101, 201) and the other device is a current target device (102, 202); and wherein the determining, by the one device, whether to exchange operating modes with the other device according to the relevant parameters of the one device and the other device comprises: determining, by the one device, whether the types of the one device and the other device are both mobile devices.

7. The method according to claim 5, wherein the parameter acquiring step comprises: receiving by the one device a switch inquiry message containing the relevant parameters of the other device transmitted by the other device, to acquire the relevant parameters of the other device; wherein the relevant parameters comprise the type and the remaining battery duration of the other device.

8. The method according to claim 5, wherein when the one device is a current initiator device (101, 201), the one device exchanges operating modes with the other device, comprising:
transmitting by the one device to the other device a switch request message instructing the one device to switch to the target mode to operate, such that the other device generates an RF field and switches to the initiative mode to operate;
detecting (S410, S510, S609, S709, S809) the RF field generated by the other device; and
terminating (S411, S511, S610, S710, S810) by the one device the generation of the RF field and switching to the target mode to operate if the RF field generated by the other device is detected.

9. The method according to claim 5, wherein when the one device is a current target device (102, 202), the one device exchanges operating modes with the other device, comprising:
generating (S408, S508, S517, S607) an RF field by the one device and switching to the initiative mode to operate; and
informing (S409, S509, S518, S608) to the other device, such that the other device terminates the generation of the RF field and switches to the target mode to operate when the other device detected the RF field generated by the one device.

10. A module for switching operating mode between in near-field communication devices, wherein the module is disposed in one device of two devices in near-field communication and wherein the module comprises:
a parameter acquiring unit (901, 1501) configured to acquire relevant parameters of the one device and the other device including type of the other device a remaining battery duration of the one device and a remaining battery duration of the other device;
a determining unit (902, 1502) configured to determine whether to switch to a target operating mode according to the relevant parameters of the one device and the other device; wherein the relevant parameters of the one device include type of the one device; and the determining unit further configured to determine whether the remaining battery duration of the other device is greater than the remaining battery duration of the one device; and
a switching unit (903, 1503) configured to switch the operating mode of the one device to the target mode if the determining results of the determining unit are positive.

11. A module for switching operating mode between in near-field communication devices, wherein the module is disposed in one device of two devices in near-field communication and wherein the module comprises:
a parameter acquiring unit (901, 1501) configured to acquire relevant parameters of the one device and the other device including type of the other device a remaining battery duration of the one device and a remaining battery duration of the other device;
a determining unit (902, 1502) configured to determine whether to exchange operating modes with the other according to the relevant parameters of the one device and the other device; wherein the relevant parameters of the one device include type of the one device; and the determining unit further configured to determine whether the remaining battery duration of the other device is greater than the remaining battery duration of the one device; and
a switching unit (903, 1503) configured to exchange the operating mode of the one device with that of the other device if the determining results of the determining unit are positive.

## Patentansprüche

1. Verfahren zum Umschalten eines Betriebsmodus zwischen Nahfeldkommunikationsvorrichtungen, wobei das Verfahren die folgenden Schritte umfasst:
einen Parametererfassungsschritt (301, 1401): Erfassen, durch eine Vorrichtung von zwei Vorrichtungen in Nahfeldkommunikation, von relevanten Parametern der einen Vorrichtung und der anderen Vorrichtung, die Art der anderen Vorrichtung, eine verbleibende Batteriedauer der einen Vorrichtung und eine verbleibende Batteriedauer der anderen Vorrichtung beinhalten;
einen Bestimmungsschritt (302, 1402): Bestimmen, durch die eine Vorrichtung, ob gemäß den relevanten Parametern der einen Vorrichtung und der anderen Vorrichtung in einen Ziel-Betriebsmodus umgeschaltet werden soll, wobei die relevanten Parameter der einen Vorrichtung die Art der einen Vorrichtung beinhalten, und Bestimmen, ob die verbleibende Batteriedauer der anderen Vorrichtung größer als die verbleibende Batteriedauer der einen Vorrichtung ist; und
einen Umschaltschritt (303, 1403): Umschalten des Betriebsmodus durch die eine Vorrichtung in den Zielmodus, wenn die Bestimmungsergebnisse des Bestimmungsschritts positiv sind.

2. Verfahren nach Anspruch 1, wobei
das Bestimmen, durch die eine Vorrichtung, ob gemäß den relevanten Parametern der einen Vorrichtung und der anderen Vorrichtung in einen Ziel-Betriebsmodus umgeschaltet werden soll, Folgendes umfasst:
Bestimmen, durch die eine Vorrichtung, ob sowohl die Art der einen Vorrichtung als auch die Art der anderen Vorrichtung eine Mobilvorrichtung ist.

3. Verfahren nach Anspruch 2, wobei die eine Vorrichtung eine aktuelle Initiatorvorrichtung ist und die andere Vorrichtung eine aktuelle Zielvorrichtung ist, und
wobei die verbleibende Batteriedauer der aktuellen Initiatorvorrichtung (101, 201) ein Wert ist, der durch Dividieren einer der einen Vorrichtung (101, 201) zugeführten aktuellen Energie durch eine Echtzeitleistungsaufnahme der aktuellen Initiatorvorrichtung (101, 201) erhalten wird; und
die verbleibende Batteriedauer der aktuellen Zielvorrichtung (102, 202) ein Wert ist, der durch Dividieren einer der aktuellen Zielvorrichtung (102, 202) zugeführten aktuellen Energie durch eine Echtzeitleistungsaufnahme der aktuellen Zielvorrichtung (102, 202) erhalten wird.

4. Verfahren nach Anspruch 1, wobei der Parametererfassungsschritt Folgendes umfasst: Empfangen, durch die eine Vorrichtung, einer Umschaltanfragenachricht, die die durch die andere Vorrichtung übertragenen relevanten Parameter der anderen Vorrichtung enthält, um die relevanten Parameter der anderen Vorrichtung zu erfassen; wobei die relevanten Parameter die Art und die verbleibende Batteriedauer der anderen Vorrichtung umfassen.

5. Verfahren zum Umschalten eines Betriebsmodus zwischen Nahfeldkommunikationsvorrichtungen, wobei das Verfahren die folgenden Schritte umfasst:
einen Parametererfassungsschritt (301, 1401): Erfassen, durch eine Vorrichtung von zwei Vorrichtungen in Nahfeldkommunikation, von relevanten Parametern der einen Vorrichtung und der anderen Vorrichtung, die Art der anderen Vorrichtung, eine verbleibende Batteriedauer der einen Vorrichtung und eine verbleibende Batteriedauer der anderen Vorrichtung beinhalten;
einen Bestimmungsschritt (302, 1402): Bestimmen, durch die eine Vorrichtung, ob gemäß den relevanten Parametern der einen Vorrichtung und der anderen Vorrichtung Betriebsmodi getauscht werden sollen, wobei die relevanten Parameter der einen Vorrichtung die Art der einen Vorrichtung beinhalten, und Bestimmen, ob die verbleibende Batteriedauer der anderen Vorrichtung größer als die verbleibende Batteriedauer der einen Vorrichtung ist; und
einen Umschaltschritt (303, 1403): Tauschen des Betriebsmodus der einen Vorrichtung mit dem der anderen Vorrichtung, wenn die Bestimmungsergebnisse des Bestimmungsschritts positiv sind.

6. Verfahren nach Anspruch 5, wobei die eine Vorrichtung eine aktuelle Initiatorvorrichtung (101, 201) ist und die andere Vorrichtung eine aktuelle Zielvorrichtung (102, 202) ist; und
wobei das Bestimmen, durch die eine Vorrichtung, ob gemäß den relevanten Parametern der einen Vorrichtung und der anderen Vorrichtung Betriebsmodi getauscht werden sollen, Folgendes umfasst: Bestimmen, durch die eine Vorrichtung, ob sowohl die Art der einen Vorrichtung als auch die Art der anderen Vorrichtung eine Mobilvorrichtung ist.

7. Verfahren nach Anspruch 5, wobei der Parametererfassungsschritt Folgendes umfasst: Empfangen, durch die eine Vorrichtung, einer Umschaltanfragenachricht, die die durch die andere Vorrichtung übertragenen relevanten Parameter der anderen Vorrichtung enthält, um die relevanten Parameter der anderen Vorrichtung zu erfassen; wobei die relevanten Parameter die Art und die verbleibende Batteriedauer der anderen Vorrichtung umfassen.

8. Verfahren nach Anspruch 5, wobei, wenn die eine Vorrichtung eine aktuelle Initiatorvorrichtung (101, 201) ist, die eine Vorrichtung Betriebsmodi mit der anderen Vorrichtung tauscht, umfassend:
Übertragen, durch die eine Vorrichtung an die andere Vorrichtung, einer Umschaltanfragenachricht, die die andere Vorrichtung anweist, zum Betrieb in den Zielmodus umzuschalten, so dass die andere Vorrichtung ein HF-Feld erzeugt und zum Betrieb in den Initiativmodus umschaltet;
Detektieren (S410, S510, S609, S709, S809) des durch die andere Vorrichtung erzeugten HF-Felds; und
Beenden (S411, S511, S610, S710, S810) durch die eine Vorrichtung der Erzeugung des HF-Felds und Umschalten zum Betrieb in den Zielmodus, wenn das durch die andere Vorrichtung erzeugte HF-Feld detektiert wird.

9. Verfahren nach Anspruch 5, wobei, wenn die eine Vorrichtung eine aktuelle Zielvorrichtung (102, 202) ist, die eine Vorrichtung Betriebsmodi mit der anderen Vorrichtung tauscht, umfassend:
Erzeugen (S408, S508, S517, S607) eines HF-Felds durch die eine Vorrichtung und Umschalten in den Initiativmodus zum Betrieb; und
Informieren (S409, S509, S518, S608) der anderen Vorrichtung, so dass die andere Vorrichtung die Erzeugung des HF-Felds beendet und zum Betrieb in den Zielmodus umschaltet, wenn die andere Vorrichtung das durch die eine Vorrichtung erzeugte HF-Feld detektiert.

10. Modul zum Umschalten eines Betriebsmodus zwischen Nahfeldkommunikationsvorrichtungen, wobei das Modul in einer Vorrichtung von zwei Vorrichtungen in Nahfeldkommunikation angeordnet ist und wobei das Modul Folgendes umfasst:
eine Parametererfassungseinheit (901, 1501), ausgelegt zum Erfassen von relevanten Parametern der einen Vorrichtung und der anderen Vorrichtung, die Art der anderen Vorrichtung, eine verbleibende Batteriedauer der einen Vorrichtung und eine verbleibende Batteriedauer der anderen Vorrichtung beinhalten;
eine Bestimmungseinheit (902, 1502), ausgelegt zum Bestimmen, ob gemäß den relevanten Parametern der einen Vorrichtung und der anderen Vorrichtung in einen Ziel-Betriebsmodus umgeschaltet werden soll; wobei die relevanten Parameter der einen Vorrichtung die Art der einen Vorrichtung beinhalten; und die Bestimmungseinheit ferner ausgelegt ist zum Bestimmen, ob die verbleibende Batteriedauer der anderen Vorrichtung größer als die verbleibende Batteriedauer der einen Vorrichtung ist; und
eine Umschalteinheit (903, 1503), ausgelegt zum Umschalten des Betriebsmodus der einen Vorrichtung in den Zielmodus, wenn die Bestimmungsergebnisse der Bestimmungseinheit positiv sind.

11. Modul zum Umschalten eines Betriebsmodus zwischen Nahfeldkommunikationsvorrichtungen, wobei das Modul in einer Vorrichtung von zwei Vorrichtungen in Nahfeldkommunikation angeordnet ist und wobei das Modul Folgendes umfasst:
eine Parametererfassungseinheit (901, 1501), ausgelegt zum Erfassen von relevanten Parametern der einen Vorrichtung und der anderen Vorrichtung, die Art der anderen Vorrichtung, eine verbleibende Batteriedauer der einen Vorrichtung und eine verbleibende Batteriedauer der anderen Vorrichtung beinhalten;
eine Bestimmungseinheit (902, 1502), ausgelegt zum Bestimmen, ob gemäß den relevanten Parametern der einen Vorrichtung und der anderen Vorrichtung Betriebsmodi mit der anderen getauscht werden sollen; wobei die relevanten Parameter der einen Vorrichtung die Art der einen Vorrichtung beinhalten; und die Bestimmungseinheit ferner ausgelegt ist zum Bestimmen, ob die verbleibende Batteriedauer der anderen Vorrichtung größer als die verbleibende Batteriedauer der einen Vorrichtung ist; und
eine Umschalteinheit (903, 1503), ausgelegt zum Tauschen des Betriebsmodus der einen Vorrichtung mit dem der anderen Vorrichtung, wenn die Bestimmungsergebnisse der Bestimmungseinheit positiv sind.

## Revendications

1. Procédé de commutation de mode de fonctionnement entre des dispositifs de communication en champ proche, le procédé comprenant les étapes suivantes :
une étape d'acquisition de paramètres (301, 1401) : acquérir, par un dispositif parmi deux dispositifs en communication en champ proche, des paramètres pertinents du premier dispositif et de l'autre dispositif, y compris le type de l'autre dispositif, une durée de batterie restante du premier dispositif et une durée de batterie restante de l'autre dispositif ;
une étape de détermination (302, 1402) : déterminer, par le premier dispositif, s'il faut passer à un mode de fonctionnement cible selon les paramètres pertinents du premier dispositif et de l'autre dispositif, où les paramètres pertinents du premier dispositif comprennent le type du premier dispositif, et déterminer si la durée de batterie restante de l'autre dispositif est supérieure à la durée de batterie restante du premier dispositif ; et
une étape de commutation (303, 1403) : échanger de mode de fonctionnement, par le premier dispositif, vers le mode cible si les résultats de l'étape de détermination sont positifs.

2. Procédé selon la revendication 1, dans lequel :
la détermination, par le premier dispositif, du passage ou non à un mode de fonctionnement cible en fonction des paramètres pertinents du premier dispositif et de l'autre dispositif comprend de déterminer, par le premier dispositif, si les types du premier dispositif et de l'autre dispositif sont tous deux des dispositifs mobiles.

3. Procédé selon la revendication 2, dans lequel le premier dispositif est un dispositif initiateur de courant et l'autre dispositif est un dispositif cible de courant, et dans lequel la durée restante de la batterie du dispositif initiateur de courant (101, 201) est une valeur obtenue en divisant l'énergie de courant fournie au premier dispositif (101, 201) par une consommation d'énergie en temps réel du dispositif initiateur de courant (101, 201) ; et
la durée restante de la batterie du dispositif cible de courant (102, 202) est une valeur obtenue en divisant l'énergie de courant fournie au dispositif cible de courant (102, 202) par la consommation d'énergie en temps réel du dispositif cible de courant (102, 202).

4. Procédé selon la revendication 1, dans lequel l'étape d'acquisition de paramètres comprend de recevoir, par le premier dispositif, un message d'interrogation de commutation contenant les paramètres pertinents de l'autre dispositif transmis par l'autre dispositif, pour acquérir les paramètres pertinents de l'autre dispositif, où les paramètres pertinents comprennent le type et la durée de batterie restante de l'autre dispositif.

5. Procédé de commutation de mode de fonctionnement entre des dispositifs de communication en champ proche, le procédé comprenant les étapes suivantes :
une étape d'acquisition de paramètres (301, 1401) : acquérir, par un dispositif parmi deux dispositifs en communication en champ proche, des paramètres pertinents du premier dispositif et de l'autre dispositif, y compris le type de l'autre dispositif, une durée de batterie restante du premier dispositif et une durée de batterie restante de l'autre dispositif ;
une étape de détermination (302, 1402) : déterminer, par le premier dispositif, s'il faut échanger de modes de fonctionnement avec l'autre dispositif selon les paramètres pertinents du premier dispositif et de l'autre dispositif, où les paramètres pertinents du premier dispositif comprennent le type du premier dispositif, et déterminer si la durée de batterie restante de l'autre dispositif est supérieure à la durée de batterie restante du premier dispositif ; et
une étape de commutation (303, 1403) : échanger le mode de fonctionnement du premier dispositif avec celui de l'autre dispositif si les résultats de l'étape de détermination sont positifs.

6. Procédé selon la revendication 5, dans lequel le premier dispositif est un dispositif initiateur de courant (101, 201) et l'autre dispositif est un dispositif cible de courant (102, 202) ; et
dans lequel la détermination, par le premier dispositif, de l'opportunité d'échanger de modes de fonctionnement avec l'autre dispositif en fonction des paramètres pertinents du premier dispositif et de l'autre dispositif comprend de déterminer, par le premier dispositif, si les types du premier dispositif et de l'autre dispositif sont tous deux des dispositifs mobiles.

7. Procédé selon la revendication 5, dans lequel l'étape d'acquisition de paramètres comprend de recevoir, par le premier dispositif, un message d'interrogation de commutation contenant les paramètres pertinents de l'autre dispositif transmis par l'autre dispositif, pour acquérir les paramètres pertinents de l'autre dispositif, où les paramètres pertinents comprennent le type et la durée de batterie restante de l'autre dispositif.

8. Procédé selon la revendication 5, dans lequel, lorsque le premier dispositif est un dispositif initiateur de courant (101, 201), le premier dispositif échange de modes de fonctionnement avec l'autre dispositif, ce qui comprend :
la transmission, par le premier dispositif à l'autre dispositif, d'un message de demande de commutation ordonnant au premier dispositif de passer au mode cible de fonctionnement, de sorte que l'autre dispositif génère un champ RF et passe au mode d'initiative de fonctionnement ;
la détection (S410, S510, S609, S709, S809) du champ RF généré par l'autre dispositif ; et
la fin (S411, S511, S610, S710, S810), par le premier dispositif, de la génération du champ RF et la commutation vers le mode cible de fonctionnement si le champ RF généré par l'autre dispositif est détecté.

9. Procédé selon la revendication 5, dans lequel, lorsque le premier dispositif est un dispositif cible de courant (102, 202), le premier dispositif échange de modes de fonctionnement avec l'autre dispositif, ce qui comprend :
la génération (S408, S508, S517, S607) d'un champ RF par le premier dispositif et la commutation vers le mode d'initiative de fonctionnement ; et
la transmission d'informations (S409, S509, S518, S608) à l'autre dispositif, de sorte que l'autre dispositif mette fin à la génération du champ RF et commute vers le mode cible de fonctionnement lorsque l'autre dispositif a détecté le champ RF généré par le premier dispositif.

10. Module pour commuter le mode de fonctionnement entre des dispositifs de communication en champ proche, dans lequel le module est disposé dans un dispositif parmi deux dispositifs en communication en champ proche et dans lequel le module comprend :
une unité d'acquisition de paramètres (901, 1501) configurée pour acquérir des paramètres pertinents du premier dispositif et de l'autre dispositif, y compris le type de l'autre dispositif, une durée de batterie restante du premier dispositif et une durée de batterie restante de l'autre dispositif ;
une unité de détermination (902, 1502) configurée pour déterminer s'il faut passer à un mode de fonctionnement cible en fonction des paramètres pertinents du premier dispositif et de l'autre dispositif, où les paramètres pertinents du premier dispositif incluent le type du premier dispositif ; et l'unité de détermination est en outre configurée pour déterminer si la durée de batterie restante de l'autre dispositif est supérieure à la durée de batterie restante du premier dispositif ; et
une unité de commutation (903, 1503) configurée pour commuter le mode de fonctionnement du premier dispositif vers le mode cible si les résultats de détermination de l'unité de détermination sont positifs.

11. Module pour commuter le mode de fonctionnement entre des dispositifs de communication en champ proche, dans lequel le module est disposé dans un dispositif parmi deux dispositifs en communication en champ proche, et dans lequel le module comprend :
une unité d'acquisition de paramètres (901, 1501) configurée pour acquérir des paramètres pertinents du premier dispositif et de l'autre dispositif, y compris le type de l'autre dispositif, une durée de batterie restante du premier dispositif et une durée de batterie restante de l'autre dispositif ;
une unité de détermination (902, 1502) configurée pour déterminer s'il faut échanger les modes de fonctionnement avec l'autre selon les paramètres pertinents du premier dispositif et de l'autre dispositif ; où les paramètres pertinents du premier dispositif comprennent le type du premier dispositif ; et l'unité de détermination est en outre configurée pour déterminer si la durée de batterie restante de l'autre dispositif est supérieure à la durée de batterie restante du premier dispositif ; et
une unité de commutation (903, 1503) configurée pour échanger le mode de fonctionnement du premier dispositif avec celui de l'autre dispositif si les résultats de détermination de l'unité de détermination sont positifs.
